# EUROPÄISCHE PATENTANMELDUNG

(11) **EP 1 195 298 A2**
(43) Veröffentlichungstag der Anmeldung: **10.04.2002**
(21) Anmeldenummer: 01117173.3
(22) Anmeldetag: 14.07.2001
(51) Int. Cl.: B60R 1/072

(54) **Stellantrieb**

(30) Priorität: 06.10.2000 DE 20017163 U
(71) Anmelder: Bühler Motor GmbH, 90459 Nürnberg (DE)
(72) Erfinder: Seichter, Werner, 91166 Georgensgmünd (DE); Guttenberger, Richard, 91171 Greding (DE)

(57) **Zusammenfassung**

Stellantrieb für eine an einem Kraftfahrzeug einzustellende Spiegelscheibe mit einem Antriebsgehäuse (2), das gegenüber dem Kraftfahrzeug festlegbar ist und mindestens einen Elektro-Antrieb aufnimmt, einem Träger-Element (3) für die Spiegelscheibe, wobei das Träger-Element (3) um zwei im wesentlichen senkrecht zu einander verlaufende Schwenkachsen (6, 7) gegenüber dem Antriebsgehäuse (2) verschwenkbar gelagert ist und durch den mindestens einen Elektro-Antrieb schwenkantreibbar ist und Verstellbändern (8, 9) zur Verschwenkung des Träger-Elementes (3) gegenüber dem Antriebsgehäuse (2), welche Verstellbänder (8, 9) auf dem Antriebsgehäuse (2) verschiebbar geführt sind, gegenüber dem Träger-Element (3) jeweils durch einen Haken (15) im wesentlichen entlang einer senkrecht zu der durch die beiden Schwenkachsen (6, 7) aufgespannten Ebene verlaufenden Spann-Richtung (20) festgelegt sind und gegenüber dem Träger-Element (3) jeweils durch ein Stütz-Element (23) quer zur Spann-Richtung (20) festgelegt sind, um ein Abrutschen des jeweiligen Verstellbandes (8, 9) von dem zugehörigen Haken (15) zu verhindern.

## Beschreibung

Die Erfindung betrifft einen Stellantrieb für eine an einem Kraftfahrzeug einzustellende Spiegelscheibe.

Aus der DE 199 19 529 A1 ist ein Stellantrieb für einen Kraftfahrzeugspiegel bekannt. Dieser besteht aus einem gegenüber dem Kraftfahrzeug festlegbaren, kugelkalottenförmigen Antriebsgehäuse und einer gegenüber dem Antriebsgehäuse angetrieben verschwenkbaren Trägerplatte für die Spiegelscheibe. Zwei Verstellbänder sind an ihren jeweiligen Enden an gegenüberliegenden Randpunkten der Trägerplatte festgelegt und auf dem Antriebsgehäuse verschiebbar geführt. Die Verstellbänder weisen an ihren freien Enden kreisringsegmentförmige Öffnungen auf, in die ein mit der Trägerplatte verbundener Haken ähnlichen Querschnitts eingreift und die Trägerplatte entlang einer Spannrichtung, die senkrecht zur Trägerplatte verläuft, festlegt. Bei den beim Betrieb des Kraftfahrzeugs erfolgenden Erschütterungen oder Krafteinwirkungen von außen auf den Spiegel, z.B. durch Vandalismus, löst sich häufig das Verstellband von dem Haken, wodurch nicht unerhebliche nachträgliche Reparaturkosten entstehen.

Der Erfindung liegt die Aufgabe zugrunde, einen Stellantrieb der bekannten Art derart weiterzubilden, daß die Verbindung der Verstellbänder mit der Trägerplatte verbessert wird.

Die Aufgabe wird durch die Merkmale des Anspruchs 1 gelöst. Der Kern der Erfindung besteht darin, das jeweilige Verstellband entlang einer senkrecht zur Trägerplatte verlaufenden Spannrichtung und gleichzeitig quer zu dieser festzulegen, so daß ein Verbiegen des Verstellbandes durch Zugkräfte auf den zugehörigen Haken verhindert wird.

Weitere vorteilhafte Ausgestaltungen der Erfindung ergeben sich aus den Unteransprüchen.

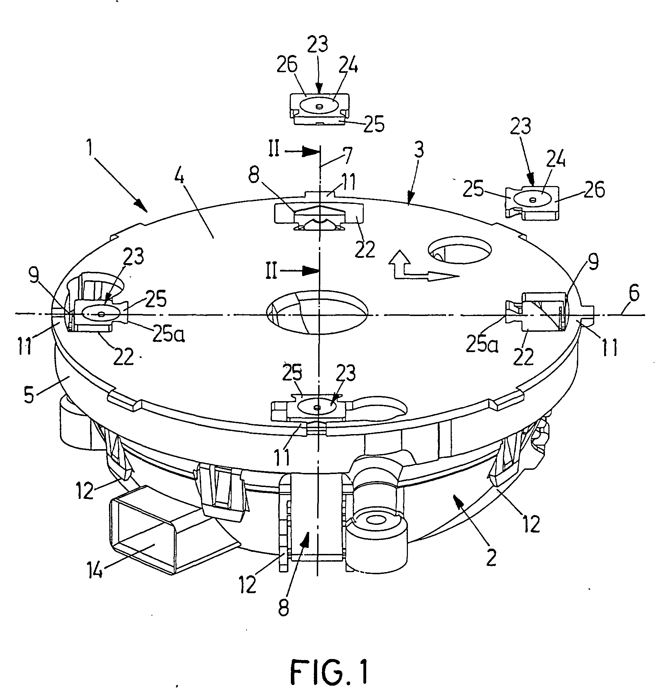

Zusätzliche Vorteile und Einzelheiten der Erfindung ergeben sich aus der Beschreibung eines Ausführungsbeispieles anhand der Zeichnung. Es zeigen
- Fig. 1: einen erfindungsgemäßen Stellantrieb,
- Fig. 2: einen Querschnitt gemäß der Schnittlinie II-II in Fig. 1 und
- Fig. 3: einen Querschnitt gemäß der Schnittlinie III-III in Fig. 2.

Ein Stellantrieb 1 für eine an einem Kraftfahrzeug einzustellende Spiegelscheibe weist ein im wesentlichen kugelkalottenförmiges Antriebsgehäuse 2 auf, das gegenüber dem Kraftfahrzeug festlegbar ist. Ein Träger-Element 3 für die Spiegelscheibe, das eine kreisförmige Trägerplatte 4 sowie einen einteilig damit ausgebildeten, ringzylindrischen Verbindungssteg 5 aufweist, ist um zwei senkrecht zueinander verlaufende Schwenkachsen 6 und 7 gegenüber dem Antriebsgehäuse 2 verschwenkbar. Zwei aus Metall bestehende Verstellbänder 8 und 9 sind an ihren freien Enden 10 an jeweils paarweise gegenüberliegenden Randpunkten 11 des Träger-Elements 3 festgelegt und verlaufen senkrecht zueinander. Die Verstellbänder 8 und 9 sind in nach außen offenen Führungsschienen 12, die auf Meridianen auf dem Antriebsgehäuse 2 verlaufen, verschiebbar geführt und kreuzen einander unter 90°. In dem Antriebsgehäuse 2 sind zwei Elektromotoren mit nachgeordneten Getrieben vorgesehen, die durch unter den Verstellbändern 8 und 9 liegende Öffnungen in dem Antriebsgehäuse 2 mit den Verstellbändern 8 und 9, die in diesem Bereich eine Zahnleiste 13 aufweisen, in Eingriff sind. Durch eine Betätigung der Elektromotoren können die Verstellbänder 8 und 9 relativ zu dem Antriebsgehäuse 2 und damit das Träger-Element 3 relativ zu dem Antriebsgehäuse 2 um die Schwenkachsen 6 und 7 verschwenkt werden. Die elektrische Versorgung und die Ansteuerung der Motoren erfolgt über eine an dem Antriebsgehäuse 2 angeordnete Steckbuchse 14. Der Grundaufbau des Stellantriebes sowie insbesondere die Lagerung des Träger-Elements 3 gegenüber dem Antriebsgehäuse 2 ist aus der DE 199 19 529 A1 bekannt, auf die hiermit ausdrücklich verwiesen wird.

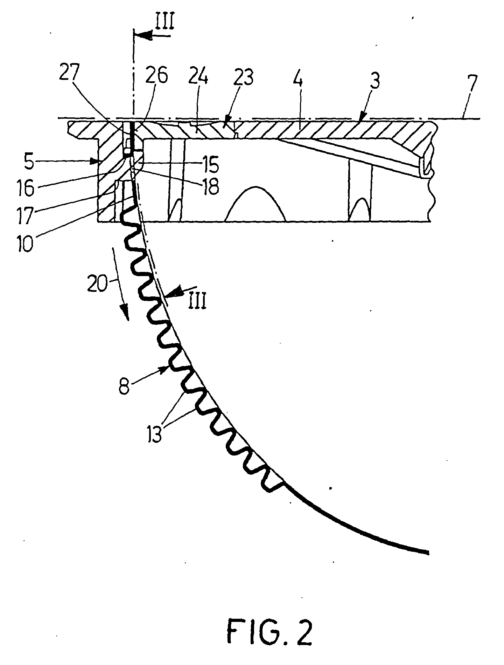

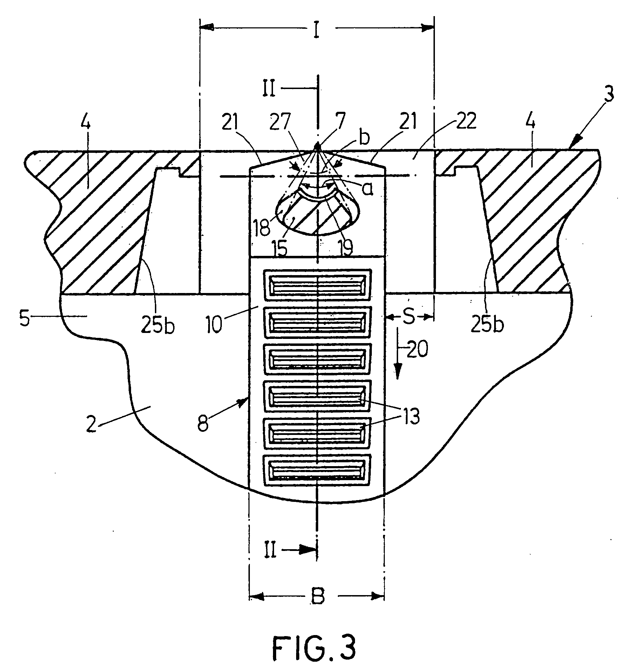

Im folgenden wird unter Bezugnahme auf Fig. 2 und 3 die Verbindung der Verstellbänder 8 und 9 mit dem Träger-Element 3 genauer beschrieben. An der Innenseite des Verbindungssteges 5 sind vier jeweils um 90° zueinander versetzte, nach innen vorspringende Haken 15 vorgesehen. Die Haken 15 weisen einen kreisringsegmentförmigen Querschnitt auf, wobei die benachbarte Schwenkachse 6 bzw. 7 den Mittelpunkt des Kreisringsegmentes bildet und der Haken 15 bezüglich der zugehörigen Schwenkachse 6 bzw. 7 einen Winkel a einschließt. Der Haken 15 weist auf der Oberseite eine ringnutsegmentförmige Ausnehmung 16 auf. An der Unterseite weist der Haken 15 eine zylindersegmentförmige Anlagekante 17 auf. Die Verstellbänder 8 weisen im Bereich ihres jeweiligen Endes 10 eine kreisringsegmentförmige Öffnung 18 auf, deren Mittelpunkt ebenfalls durch die benachbarte Schwenkachse 6 bzw. 7 gebildet wird, und die einen Winkel b einschließt, wobei gilt b < a. Die Öffnung 18 wird nach oben durch eine kreissegmentförmige Nase 19 begrenzt. Das Verstellband 8 bzw. 9 weist an seinem freien Ende zwei schräg zur Spannrichtung 20 verlaufende Kanten 21 auf. Oberhalb des Hakens 15 ist in der Trägerplatte 4 eine im wesentlichen rechteckige Durchgriffsöffnung 22 angeordnet. In dieser ist ein als Stütz-Element ausgebildetes Abstützplättchen 23 befestigt, das einen rechteckigen Grundkörper 24 sowie einen einteilig damit ausgebildeten vorspringenden Schwalbenschwanz-Steg 25 aufweist. Gegenüber ist eine Anlagekante 26 vorgesehen. Der Steg 25 greift zur Befestigung in eine entsprechende Ausnehmung 25a in der Trägerplatte 4. Die Breite B des Verstellbandes 8 bzw. 9 und der innere Abstand I zwischen den Anschlagkanten 25b sind so gewählt, daß I > B, so daß zwischen den seitlichen Rändern des Verstellbandes 8 bzw. 9 und den Anschlagkanten 25b ein Spiel S verbleibt. Die Verstellbänder 8 und 9 weisen an ihrem Ende jenseits der Öffnung 18 einen nach außen spitz zulaufenden Band-Abschnitt 27 auf, dessen obere Kante unterhalb der oberen Kante der Trägerplatte 4 liegt oder mit dieser fluchtet.

Im folgenden wird die Montage und Funktion der Verstellbänder 8 und 9 beschrieben. Zur Montage wird ein Verstellband 8 bzw. 9 um das Antriebsgehäuse 2 geführt und die Öffnung 18 auf den Haken 15 seitlich von oben geschoben, bis die Nase 19 in Eingriff mit der Ausnehmung 16 kommt. Hierbei kann durch die Durchgriffsöffnung 22 mit einem Werkzeug von außen nachgeholfen werden. Anschließend wird das Abstützplättchen 23 in die Durchgriffsöffnung 22 eingesetzt und dort z.B. durch Kleben oder Verrasten befestigt. Die Anlagekante 26 liegt nun seitlich an dem Bandabschnitt 27 an. Bei Belastungen des Verstellbandes 8 bzw. 9 auf Zug entlang der Spannrichtung 20 wird das Verstellband 8 bzw. 9 durch den Haken 15 gehalten. Bei starker Zugkraft, beispielsweise durch falsche Demontage des Glases oder Vandalismus, kann sich die kreisringsegmentförmige Nase 19 und der obere Band-Abschnitt 27 verbiegen. Dieses Verbiegen wird durch die Stütz-Elemente unterbunden. Bei einer Lockerung des Sitzes der Öffnung 18 auf dem Haken 15 kann das Verstellband 8 bzw. 9 nicht von dem Haken 15 rutschen, da das Band in dem in Fig. 2 dargestellten Schnitt nach links durch den Verbindungssteg 5 und nach rechts durch die Anlagekante 26 des Abstützplättchens 23 gehalten wird. Es kann somit auch bei starken und dauerhaften Erschütterungen sowie einer Krafteinwirkung von außen auf die Trägerplatte 4 durch ein Ziehen an der Spiegelscheibe nicht bzw. erst oberhalb einer sehr viel höheren Zugkraft dazu kommen, daß sich die Verbindung zwischen Verstellband 8 bzw. 9 und Haken 15 löst. Durch die kreisringsegmentförmige Ausbildung des Hakens 15 und der Öffnung 18 kann das Verstellband 8 bzw. 9 um die Schwenkachse 7 bzw. 6 verschwenkt werden. Hierfür ist das seitliche Spiel S vorgesehen, um zu verhindern, daß das Verstellband 8 bzw. 9 in seiner Verschwenkbarkeit begrenzt wird. Durch die schräg verlaufenden Kanten 21 wird sichergestellt, daß auch das gegenüber der Trägerplatte 4 verschwenkte Band 8 bzw. 9 nicht mit der auf der Trägerplatte 4 angeordneten Spiegelscheibe kollidiert.

## Patentansprüche

1. Stellantrieb für eine an einem Kraftfahrzeug einzustellende Spiegelscheibe mit
a) einem Antriebsgehäuse (2), das
i) gegenüber dem Kraftfahrzeug festlegbar ist und
ii) mindestens einen Elektro-Antrieb aufnimmt,
b) einem Träger-Element (3) für die Spiegelscheibe, wobei das Träger-Element (3)
i) um zwei im wesentlichen senkrecht zu einander verlaufende Schwenkachsen (6, 7) gegenüber dem Antriebsgehäuse (2) verschwenkbar gelagert ist und
ii) durch den mindestens einen Elektro-Antrieb schwenkantreibbar ist und
c) Verstellbändern (8, 9) zur Verschwenkung des Träger-Elementes (3) gegenüber dem Antriebsgehäuse (2), welche Verstellbänder (8, 9)
i) auf dem Antriebsgehäuse (2) verschiebbar geführt sind,
ii) gegenüber dem Träger-Element (3) jeweils durch einen Haken (15) im wesentlichen entlang einer senkrecht zu der durch die beiden Schwenkachsen (6, 7) aufgespannten Ebene verlaufenden Spann-Richtung (20) festgelegt sind und
iii) gegenüber dem Träger-Element (3) jeweils durch ein Stütz-Element (23) quer zur Spann-Richtung (20) festgelegt sind, um ein Abrutschen des jeweiligen Verstellbandes (8, 9) von dem zugehörigen Haken (15) zu verhindern.

2. Stellantrieb gemäß Anspruch 1, **dadurch gekennzeichnet, daß** das Träger-Element (3) eine Trägerplatte (4) aufweist.

3. Stellantrieb gemäß Anspruch 2, **dadurch gekennzeichnet, daß** das Träger-Element (3) einen mit der Trägerplatte (4) verbundenen, ringzylindrischen Verbindungssteg (5) aufweist.

4. Stellantrieb gemäß Anspruch 3, **dadurch gekennzeichnet, daß** die Haken (15) senkrecht von dem Verbindungssteg (5) nach innen vorstehen.

5. Stellantrieb gemäß Anspruch 4, **dadurch gekennzeichnet, daß** in der Trägerplatte (4) oberhalb der Haken (15) Durchgriffsöffnungen (22) vorgesehen sind.

6. Stellantrieb gemäß Anspruch 5, **dadurch gekennzeichnet, daß** die Stütz-Elemente (23) in der Durchgriffsöffnung (22) festlegbar sind.

7. Stellantrieb gemäß Anspruch 6, **dadurch gekennzeichnet, daß** die Stütz-Elemente (23) jeweils einen rechteckigen Grundkörper (24) aufweisen.

8. Stellantrieb gemäß Anspruch 7, **dadurch gekennzeichnet, daß** eine Anlagekante (26) vorgesehen ist, gegenüber der ein Verstellband (8,9) anliegt.

9. Stellantrieb gemäß einem der Ansprüche 6 bis 8, **dadurch gekennzeichnet, daß** das Stütz-Element (23) in der Durchgriffsöffnung (22) durch Verrasten, Verschweißen oder Einkleben festgelegt ist.

10. Stellantrieb gemäß Anspruch 7, **dadurch gekennzeichnet, daß** das Verstellband (8, 9) verschwenkbar ist.
